# EUROPÄISCHE PATENTANMELDUNG

(11) **EP 1 142 617 A1**
(43) Veröffentlichungstag der Anmeldung: **10.10.2001**
(21) Anmeldenummer: 01106486.2
(22) Anmeldetag: 26.03.2001
(51) Int. Cl.: A63F 13/06, G06K 11/18

(54) **Steuereinrichtung mit einem oder mehreren Armen zum Steuern eines Geräts oder eines Computers**

(30) Priorität: 27.03.2000 AT 230002000; 18.08.2000 US 640782
(71) Anmelder: Fuxberger, Friedolin, 2371 Hinterbrühl (AT)
(72) Erfinder: Fuxberger, Friedolin, 2371 Hinterbrühl (AT)
(74) Vertreter: Hellwig, Tillmann, Dr.

(57) **Zusammenfassung**

Es wird eine Vorrichtung zur Steuerung eines Cursors vorgeschlagen, die an eine Steuereinrichtung eines Gerätes montierbar ist. Dadurch können das Gerät und der Computer gleichzeitig ohne Beinträchtigung der Funktionen betrieben bzw. gesteuert werden.

Mit der Erfindung kann daher ein interaktives EDV-Programm mit vorwiegend Maus-Eingabe wie z. B. Computerspiele, Videospiele, Internet-Surfen, oder auch speziell entwickelte Programme, zusätzlich zur eigentlichen Funktion des Geräts bedient werden.

## Beschreibung

Die Erfindung betrifft eine Vorrichtung zur Steuerung eines Computers, eine Steuereinrichtung für ein Gerät nach dem nebengeordneten Anspruch 7 und einen Computer nach dem nebengeordneten Anspruch 9.

Im Zusammenhang mit der Erfindung haben die nachfolgend aufgeführten verwendeten Begriffe folgende Bedeutung:
- **Gerät:**: Einheit mechanischer und / oder elektrischer Elemente, welche einem bestimmten Zweck dienen wie z.B. Fluggerät, Trainingsgerät, usw. Ein solches Gerät wird über eine Steuereinrichtung wie z. B. Steuerknüppel, Steuerhorn oder Lenker, zur Erreichung des Einsatzzweckes von einem Benutzer gesteuert und / oder diese Steuereinrichtung, insbesondere ein Lenker, unterstützt den Benutzer dabei, die erforderliche Körperhaltung einzunehmen.
- **Steuereinrichtung:**: Steuerknüppel bzw. Steuerhorn oder Lenker oder ähnliches zur Steuerung eines Geräts; normalerweise zur leichteren Handhabung mit Handgriffen versehen.
- **Steuerknüppel:**: An einem Gelenk an einem Ende um zwei Drehachsen beweglich befestigter Stab. Der Steuerknüppel wird von der Hand des Benutzers bewegt. Diese Bewegung wird als Steuerinformation auf das Gerät übertragen.
- **Lenker:**: An einem Gelenk um eine Drehachse in seiner Mitte beweglich befestigter normalerweise symmetrisch geformtes Rohr oder Stab, an dessen beiden Enden Handgriffe sein können. Durch Hände des Benutzers an den beiden Handgriffen mitgeteilte Bewegungen um die Drehachse werden als Steuerinformationen dem Gerät übertragen. In einem Sonderfall ist der Lenker starr montiert und dient dazu, die erforderliche Körperhaltung des Benutzers zu gewährleisten bzw. die Hände abzustützen.
- **Steuerhorn:**: An einem Gelenk an einem Ende um zwei Drehachsen beweglich befestigter Stab, an dessen freiem Ende ein Lenker drehbar gelagert ist. Durch die Hände an den beiden Enden des Lenkers vom Benutzer in den verschiedenen Freiheitsgraden mitgeteilte Bewegungen werden als Steuerinformationen dem Gerät übertragen.
- **Arm:**: Jenes Ende des Stabes einer Steuereinrichtung wie Steuerknüppel, Steuerhorn oder Lenker, welches vom Gelenk oder der Drehachse entfernt liegt. Hier kann ein Handgriff angebracht sein. Eine Steuereinrichtung kann auch mehr als ein freies Ende und damit Arme haben. Für die Zwecke dieser Erfindung sind an diesem Arm ein Sensor oder mehrere Sensoren und Tasten bzw. Schalter zweckentsprechend angebracht.
- **Computer:**: Eine frei programmierbare EDV-Anlage mit einem Betriebssystem mit graphischer Benutzeroberfläche (z. B. Windows) und einem Bildschirm. Die Programm- und Eingabefunktionen sind u. a. durch Bewegungen eines Cursors und Tastenbetätigungen, welche von einer Cursorsteuerung über eine Schnittstelle eingegeben werden, steuerbar. Dies wird oft mit einer Computer-Maus erreicht.
- **Vorrichtung zur Steuerung eines Cursors:**: Ein für die Kontrolle der Bewegung eines Cursors d. h. der Cursorsteuerung auf einem Bildschirm geeignetes Eingabegerät mit typischerweise zwei Freiheitsgraden und zumindest einer Taste, welche den 'Mausklick' auslöst, wie z. B. eine Computer-Maus, ein Trackerball, ein Joystick, usw. Im Normalfall ist für die Bedienung eines solchen Eingabegeräts eine Hand dediziert notwendig; man kann solange die Vorrichtung zur Steuerung eines Cursors betätigt wird, nichts anderes mit dieser Hand machen.

Wenn das Gerät und der Computer nicht von vorneherein für eine gleichzeitige Benutzung vorgesehen sind, aber von einer Person gleichzeitig gesteuert bzw. bedient werden sollen, muss die Person eine Hand von einem der Handgriffe der Steuereinrichtung nehmen, um damit die Vorrichtung zur Steuerung eines Cursors des Computers zu bedienen. Damit ist aber die Funktion der Steuereinrichtung bzw. die Sicherheit des Benutzers nicht mehr voll gewährleistet.

Interaktive Computerprogramme, wie sie z. B. als Web-Browser, Computer- und Videospiele, aber auch viele andere Programme mit graphischer Benutzeroberfläche bekannt sind, aber auch speziell für die Anwendung dieser Erfindung entwickelt werden können, benötigen zur Steuerung ihrer Funktion über eine graphische Benutzeroberfläche ein für die Cursorsteuerung geeignete Vorrichtung, wie z. B. eine Maus, einen Trackerball, einen Joystick, usw. Der Mehrzahl dieser Vorrichtungen zur Steuerung eines Cursors ist gemeinsam, dass sie eine entsprechende Unterlage und Platz benötigen, aber auch insbesondere eine Hand allein zur Bedienung dediziert eingesetzt werden muss.

Im Zusammenhang mit Trainingsgeräten ist es beispielsweise aus der US-PS 5 690 582 bereits bekannt geworden, gleichzeitig mit dem Treten der Pedale eines Trainingsfahrrades auch einen Computer entsprechend zu bedienen, wofür eine speziell ausgebildete Form der Eingabe für die Cursorsteuerung in Form von schwenkbaren und drehbaren Handgriffen vorgesehen ist. Insbesondere bei derartigen Trainingsgeräten ist es aber nun erforderlich, eine entsprechende, für das Training geeignete Haltung einzunehmen und im Falle von Trainingsfahrrädern ist zu diesem Zwecke zumeist ein starrer Lenker vorgesehen, auf welchem das Körpergewicht über die Arme und Handgriffe abgestützt werden kann, wobei gleichzeitig die korrekte Position eingenommen wird. Wenn nun, wie beispielsweise in der US-PS 4 512 567 vorgeschlagen, der Lenker eines derartigen Gerätes tatsächlich beweglich sein muss, um Steuerbefehle für ein Videospiel abzuleiten und beispielsweise durch Verschwenken um eine horizontale oder um eine vertikale Achse entsprechende Verstellungen eines Potentiometers zu bewirken, setzt dies voraus, dass der Lenker selbst beweglich ist. Ein derartiger Lenker kann das Körpergewicht einer Trainingsperson nun nicht mehr aufnehmen und unterliegt beim Training einer Reihe von mehr oder weniger kontrollierten Bewegungen des Körpers, so dass eine exakte Steuerung des Cursors bei gleichzeitigem Betätigen der Pedale kaum möglich erscheint. Eine derartige Ausbildung ist daher für die gewünschte Trainingsfunktion nur bedingt brauchbar, da die gleichzeitig einen Computer bedienende Person in der Regel ihren Pedalrhythmus und ihre Körperhaltung pausenlos verändert, da ja der Lenker in diesem Falle beweglich ausgebildet ist.

Der Erfindung liegt die Aufgabe zugrunde, eine Vorrichtung zur Steuerung eines Cursors bereitzustellen, die auf einer Steuereinrichtung anbringbar ist und es erlaubt, gleichzeitig und ohne gegenseitige Beeinträchtigungen sowohl eine Steuereinrichtung zu bedienen als auch einen Computer zu steuern. Außerdem soll die erfindungsgemäße Steuereinrichtung leicht zu betätigen sein. In anderen Worten: Die erfindungsgemäße Vorrichtung soll die ursprüngliche Steuerfunktion des Gerätes und die Steuerung eines Cursors zusammenführen.

Zur Lösung dieser Aufgabe besteht die erfindungsgemäße Ausbildung im Wesentlichen darin, dass die Vorrichtung zur Steuerung des Cursors eines Computers mindestens einen Sensor für die Erfassung von Biegemomenten aufweist und dass der mindestens eine Sensor unter Zwischenschaltung einer Steuerlogik, insbesondere einer Mauslogik, mit einer Schnittstelle eines Computers verbindbar ist, um den Cursor zu steuern bzw. Programmeingaben zu bewerkstelligen.

Es ist für die Funktion der erfindungsgemäßen Vorrichtung nicht notwendig, die Steuereinrichtung besonders zu gestalten, um eine leichtere Verbiegung durch die mit der Hand ausgeübten Kräfte zu ermöglichen, da Sensoren von genügender Empfindlichkeit zur Verfügung stehen, um bei normaler, konstruktionsbedingter Steifigkeit des Arms bereits durch mit einer Hand auszuübende Kräfte auswertbare Messgrößen zu erzielen.

Dadurch, dass an der Vorrichtung Sensoren für die Erfassung von Biegemomenten sowie wenigstens eine Betätigungstaste zusätzlich angebracht werden, kann die Steuereinrichtung ihre ursprüngliche Funktion unverändert gewährleisten, wobei lediglich eine zusätzliche Kraft aufgewandt werden muss, um ein bestimmtes Biegemoment zu erzeugen, welches letztlich der Cursorsteuerung dient. Das Biegemoment kann hierbei in zwei im rechten Winkel zueinander stehende Richtungsachsen zerlegt und dann zweiachsig erfasst werden, so dass mit den an einem Arm angebrachten Sensoren der Cursor sowohl in Richtung der X- als auch der Y-Achse des Bildschirmes gesteuert werden kann.

Die Auswertung des Biegemomentes kann in der Art und Weise erfolgen, dass eine gleichzeitige Bewegung des Cursors am Bildschirm in der X- und der Y-Achse erfolgen kann, daher kann der Cursor in jede beliebige Richtung bewegt werden.

Bei weiteren Ausgestaltungen der Erfindung ist vorgesehen, dass die mindestens zwei Sensoren als Anordnung von Dehnmessstreifen für die Erfassung von Biegemomenten in zwei voneinander verschiedene Richtungen ausgebildet sind, und/oder dass die mindestens zwei Sensoren als Anordnung von Dehnmessstreifenpaaren für die Erfassung von Biegemomenten in zwei voneinander verschiedene Richtungen ausgebildet sind, so dass die Ausgangssignale der Vorrichtung zuverlässiger sind und die Steuerung des Cursors in zwei Raumrichtungen auf einfache Weise ermöglicht wird.

Die räumliche Anordnung der beiden Richtungsachsen, welche mit Hilfe der Sensoren für die Erfassung des Biegemomentes eines Armes jeweils ausgewertet werden und damit für die Cursorsteuerung herangezogen werden, kann hierbei durch entsprechende Anordnung der Sensoren an zumindest einem Arm der Steuereinrichtung entsprechend den Bedürfnissen eingerichtet werden. Unter Zwischenschaltung einer Steuerlogik, insbesondere einer Mauslogik, werden die Sensoren mit einer Schnittstelle des Computers verbunden. Für die Erfassung dieser Biegemomente können die Sensoren so angeordnet werden, dass sie diejenigen Biegemomente, welche beim funktionsgemäßen Betätigen der Steuereinrichtung auftreten, nicht erfassen und lediglich zwei andere Richtungsachsen für die Cursorsteuerung heranziehen.

Mit Vorteil wird die Anordnung der Sensoren so getroffen, dass sie jeweils als Dehnmessstreifenpaare für die Erfassung von Biegemomenten in zwei voneinander und von der Richtung der Achse des Armes verschiedenen Richtungen ausgebildet sind, wodurch eine derartige Cursorsteuerung durch Aufbringen entsprechender Kräfte in einfacher Weise gelingt.

Bei anderen Ausführungsformen ist ein Schalter oder Taster zum Auslösen eines Mausklicks und/oder für die Kalibrierung der Mittenlage des Cursors unter mechanischer Belastung der Vorrichtung vorgesehen ist, so dass die Steuerung eines Computers weiter vereinfacht wird.

Für die Eingabe ist es sinnvoll, wenigstens einen Taster zur Auslösung eines Mausklicks vorzusehen, wobei naturgemäß bei Anordnung von Sensoren zu beiden Seiten der Steuereinrichtung auch mehrere derartiger Tasten oder Schalter äquivalent zu den verschiedenen Maustasten angeordnet sein können. Die Anordnung dieser Taste oder Tasten kann leicht so getroffen werden, dass die korrekte Position der Hand oder der Hände an der Steuereinrichtung nicht beeinträchtigt ist und der Mausklick jederzeit leicht ausgelöst werden kann.

In besonders vorteilhafter Weise kann eine Nullstellung bzw. Ausgangsstellung oder Zentrierung des Cursors am Bildschirm nach Einnahme der richtigen Position und Abstützung des Körpers an der Steuereinrichtung dadurch erreicht werden, dass ein Schalter oder Taster für die Kalibrierung der Mittenlage des Cursors unter eventueller mechanischer Belastung der Steuereinrichtung vorgesehen ist.

Die eingangs genannte Aufgabe wird ebenfalls gelöst durch eine Anordnung von zwei erfindungsgemäßen Vorrichtungen, bei der die Signale beider Vorrichtungen über eine Filterschaltung und/oder eine Koinzidenzschaltung bzw. einen Komparator mit der Schnittstelle des Computers verbunden sind, so dass so dass die Signale, welche in den SAensoren auf beiden Seiten auftreten, eliminiert werden können, da sie kein beabsichtigtes Steuersignal, sondern eine Störgröße darstellen.

Die eingangs genannte Aufgabe wird auch gelöst durch eine Steuereinrichtung zur Steuerung eines Geräts, mit einem oder mehreren Armen, wobei an wenigstens einem Arm eine Vorrichtung nach einem der Ansprüche 1 bis 6 vorhanden ist, da diese Steuereinrichtung ebenfalls die erfindungsgemäßen Vorteile aufweist.

Bei einer Variante der erfindungsgemäßen Steuereinrichtung ist vorgesehen, dass die Steuereinrichtung mindestens zwei Arme aufweist, dass an mindestens zwei Armen je eine Vorrichtung nach einem der Ansprüche 1 bis 5 vorhanden ist, und dass die Sensoren der an den mindestens zwei Armen vorhandenen Vorrichtungen zur Erfassung von Biegemomenten in voneinander verschiedenen räumliche Richtungen geschaltet sind, so dass die Steuerung des Cursors in zwei Koordinatenrichtungen erleichtert wird. Auch bei dieser Ausgestaltung der Erfindung können Störgrößen durch die o. g. Filter-, Komparator- oder Koinzidenzschaltung elimieniert werden.

Genauso kann aber mit Vorteil die Ausbildung der erfindungsgemäßen Steuereinrichtung so getroffen sein, dass an beiden Armen einer Steuereinrichtung mit zwei Handgriffen Sensoren angeordnet sind, deren Signale über eine Filterschaltung und / oder eine Koinzidenzschaltung bzw. einen Komparator mit der Schnittstelle des Computers verbunden sind. Bei einer derartigen Ausbildung gelingt es zusätzlich durch einfache elektronische Schaltungsanordnungen, wie beispielsweise eine Filterschaltung und / oder eine Koinzidenzschaltung bzw. einen Komparator, diejenigen Signale der Sensoren zu eliminieren, welche in den Sensoren auf beiden Seiten gleichzeitig auftreten, da in diesem Falle davon ausgegangen werden kann, dass derartige Signale auf die Bewegung des Körpers bei der Bewegung der Steuereinrichtung des Geräts insgesamt zurückzuführen sind und nicht als beabsichtigte Cursorsteuersignale für die Verstellung der Cursorposition gedacht sind. Gleichzeitig kann bei einer derartigen Ausbildung den Sensoren eines Armes die Verstellung des Cursors in der Y-Achse und den Sensoren des anderen Armes die Verstellung des Cursors in der X-Achse zugeordnet werden, woraus sich ergibt, dass für die Cursorsteuerung sowohl die linke Hand als auch die rechte Hand herangezogen werden. Andererseits ermöglicht aber eine derartige Ausbildung eine besonders effiziente Ausschaltung von nicht gewünschten Signalen, welche nicht für die Cursorsteuerung herangezogen werden sollen.

Wie bereits erwähnt, kann bei Anordnung von Sensoren zu beiden Seiten der Steuereinrichtung jeder der beiden Sensoren zur Erfassung unterschiedlicher Bewegungen des Cursors in verschiedene Richtungen geschaltet sein. Prinzipiell können hierbei ein Sensor eine Verschiebung in der Y-Achse des Bildschirms und der andere Sensor eine Verschiebung in der X-Achse des Bildschirms bewirken, wobei zur ergonomischen Erleichterung der Bedienung die jeweils voneinander verschiedenen Achsen der Bildschirmbewegung des Cursors auch durch voneinander verschiedene Richtungsachsen der Betätigung der Sensoren erreicht werden können. Mit Vorteil ist daher die Ausbildung so getroffen, dass bei Anordnung von Sensoren zu beiden Seiten der Steuereinrichtung diese Sensoren zur Erfassung von Biegemomenten in voneinander verschiedenen Richtungen geschaltet sind.

Die eingangs genannte Aufgabe wird auch gelöst durch einen Computer, mit einem Bildschirm, mit einer Vorrichtung zur Steuerung eines Cursors und mit einer Schnittstelle für eine Vorrichtung zur Steuerung eines Cursors, dadurch gekennzeichnet, dass der Computer eine Vorrichtung zur Steuerung des Cursors nach einem der Ansprüche 1 bis 5, eine Anordnung nach Anspruch 6 oder eine Steuereinrichtung nach einem der Ansprüche 7 oder 8 aufweist, da dieser Computer ebenfalls die erfindungsgemäßen Vorteile aufweist.

Die Erfindung wird nachfolgend anhand eines in der Zeichnung dargestellten Ausführungsbeispieles eines Trainingsfahrrades näher erläutert. In dieser zeigen
- Fig. 1:: eine Draufsicht auf ein erstes Ausführungsbeispiel der Erfindung in schematischer Darstellung,
- Fig. 2:: einen Schnitt nach der Linie II-II der Fig. 1,
- Fig. 3:: ein Teil eines zweiten Ausführungsbeispiels der Erfindung im Längsschnitt,
- Fig. 4: den in Fig. 3 angegebenen Schnitt III und
- Fig. 5: eine Gesamtansicht des zweiten Ausführungsbeispiels.

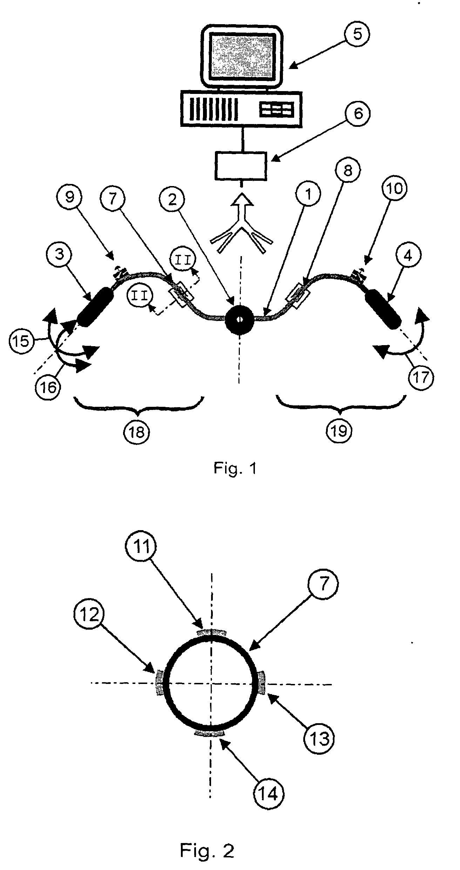

In Fig. 1 ist ein Lenker 1 ersichtlich, welcher im Falle von Fahrrädern in der Regel um eine Achse 2 verschwenkt wird, um das Fahrrad zu lenken. Im Falle eines Trainingsfahrrades ist die Schwenkbarkeit um die Achse 2 in aller Regel blockiert, so dass nach dem Ergreifen der Handgriffe 3 und 4 eine Abstützung des Körpers am Lenker erfolgen kann und gleichzeitig die Pedale, welche in Fig. 1 der Übersichtlichkeit halber nicht dargestellt sind, betätigt werden können.

Mit 5 ist der Bildschirm und die Hardware eines Computers angedeutet. In den Computer wird ein entsprechendes interaktives Programm geladen. Die entsprechende Schnittstelle des Computers wird über ein Interface 6 mit Sensoren 7 und 8 sowie Tastern 9 und 10 an den Armen 18 und 19 verbunden.

Wie insbesondere im Schnitt nach Fig. 2 ersichtlich, sind die Sensoren 7 und 8 für die Erfassung von Biegemomenten vorgesehen. Beispielsweise sind die Sensoren als Dehnmessstreifen 11, 12, 13 und 14 ausgebildet, welche durch entsprechende Brückenschaltung eine Erfassung von Biegemomenten in zwei voneinander verschiedenen Richtungsachsen normal zur Achse des Handgriffs ermöglichen.

Durch Verschwenken des Handgriffes in Richtung des Doppelpfeiles 15 oder durch Verschwenken des Handgriffes in Richtung des Doppelpfeiles 16 werden entsprechende Signale generiert, welche nach Auswertung durch die Interfaceschaltung die entsprechende Bewegung des Cursors am Bildschirm 5 des Computers ermöglichen. Die Interfaceschaltung 6 ist hierbei als Koinzidenzschaltung ausgebildet, so dass Biegemomente, welche an beiden Handgriffen 4 und 3 in im Wesentlichen identischer Weise aufgebracht werden, ausgefiltert werden können und lediglich diejenigen Signale an den Computer bzw. den Bildschirm 5 weitergeleitet werden, welche einer willkürlichen Beeinflussung des Cursors entsprechen. Die zweiachsige Erfassung der Biegemomente durch Kraftanwendung in Richtung des Doppelpfeiles 15 oder des Doppelpfeiles 16 erlaubt es, eine neue Position des Cursors am Bildschirm 5 einzustellen, worauf diese Position durch eine der beiden Tasten 9 bzw. 10 als Emulation eines Mausklicks bestätigt werden kann.

Einer dieser Taster oder ein weiterer Taster kann aber auch so geschaltet sein, dass zu Beginn, d. h. nach dem Einnehmen der korrekten Sitzposition am Trainingsfahrrad, der Cursor in eine Mittenlage am Bildschirm bereits unter mechanischer Belastung des Lenkers gebracht wird.

Die beiden Sensoren 7 und 8 können so geschaltet sein, dass jeweils Biegemomente in voneinander verschiedenen Richtungen erfasst werden, so dass beispielsweise mit den linken Sensoren 7 eine Verschiebung des Cursors in der Y-Achse am Bildschirm und mit den rechten Sensoren 8 eine Verschiebung des Cursors in der X-Achse am Bildschirm bewirkt wird. In diesem Fall kann, beispielsweise durch eine Verschwenkung des Griffes 3 in Richtung des Doppelpfeiles 15 eine Verschiebung des Cursors auf der Y-Achse am Bildschirm und durch Verschwenkung des Handgriffes 4 in Richtung des Doppelpfeiles 17 eine Verschiebung des Cursors in Richtung der X-Achse am Bildschirm bewirkt werden.

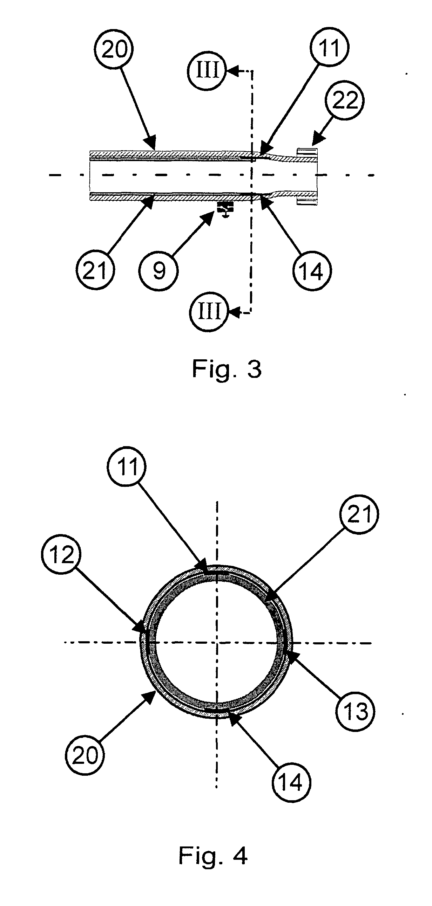

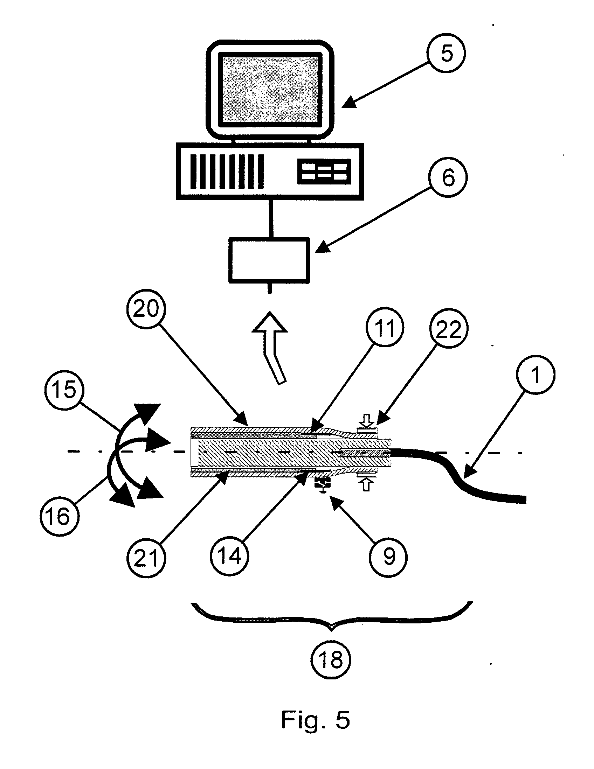

Ein zweites Ausführungsbeispiel der Erfindung ist in Fig. 3 dargestellt. Bei diesem Ausführungsbeispiel ist die Steuereinrichtung als als Nachrüstsatz, der auf einen bereits bestehenden Arm mit Handgriff montiert werden kann, ausgeführt. Fig. 3 zeigt einen solchen Nachrüstsatz von der Seite im Längsschnitt, Fig. 4 zeigt den in Fig. 3 angegebenen Schnitt III und Fig. 5 eine Gesamtansicht des zweiten Ausführungsbeispiels.

Eine im Durchmesser passend zum nachzurüstenden Arm 18 (siehe Fig. 5) gefertigte Hülse 20 wird mit den Sensoren (z. B. Dehnmessstreifen 11, 12, 13, 14) versehen. Eine elastische Auskleidung 21 stellt sicher, dass der Nachrüstsatz bei der Montage genau mittig auf die Achse des Armes 18 aufgesetzt wird (Fig. 5). Die Hülse 20 ist an einem Ende so ausgeführt, dass bei der Montage eine Spannvorrichtung 22 den Nachrüstsatz zuverlässig am Arm 18 (siehe Fig. 5) fixiert. Die beiden Pfeile bei 22 in Fig. 5 deuten die Wirkungsweise der Spannvorrichtung 22 an. Ein Taster 9 dient wieder zur Emulation des Mausklicks. Ein solcher Nachrüstsatz kann bei Bedarf mehrmals auf einem Lenker 1 angebracht werden.

## Patentansprüche

1. Vorrichtung zur Steuerung des Cursors eines Computers,
**dadurch gekennzeichnet, dass** die Vorrichtung mindestens einen Sensor für die Erfassung von Biegemomenten aufweist und **dass** der mindestens eine Sensor unter Zwischenschaltung einer Steuerlogik, insbesondere einer Mauslogik, mit einer Schnittstelle (6) eines Computers (5) verbindbar ist, um den Cursor zu steuern bzw. Programmeingaben zu bewerkstelligen.

2. Vorrichtung nach Anspruch 1, **dadurch gekennzeichnet, dass** die mindestens zwei Sensoren als Anordnung von Dehnmessstreifen (11, 12) für die Erfassung von Biegemomenten in zwei voneinander verschiedene Richtungen (15, 16) ausgebildet sind.

3. Vorrichtung nach Anspruch 1, **dadurch gekennzeichnet, dass** die mindestens zwei Sensoren als Anordnung von Dehnmessstreifenpaaren (11 und 13 sowie 12 und 14) für die Erfassung von Biegemomenten in zwei voneinander verschiedene Richtungen (15, 16) ausgebildet sind.

4. Vorrichtung nach einem der vorhergehenden Ansprüche,
**dadurch gekennzeichnet, dass** ein Schalter oder Taster (9, 10) zum Auslösen eines Mausklicks vorgesehen ist.

5. Vorrichtung nach einem der vorhergehenden Ansprüche,
**dadurch gekennzeichnet, dass** ein Schalter oder Taster (9, 10) für die Kalibrierung der Mittenlage des Cursors unter mechanischer Belastung der Vorrichtung vorgesehen ist.

6. Einrichtung zur Steuerung des Cursors eines Computers,
**dadurch gekennzeichnet, dass** zwei Vorrichtungen nach einem der vorhergehenden Ansprüche vorhanden sind, und **dass** die Signale beider Vorrichtungen über eine Filterschaltung und/oder eine Koinzidenzschaltung bzw. einen Komparator mit der Schnittstelle (6) des Computers (5) verbunden sind.

7. Steuereinrichtung zur Steuerung eines Geräts, mit einem oder mehreren Armen (18, 19), **dadurch gekennzeichnet, dass** an wenigstens einem Arm (18, 19) eine Vorrichtung nach einem der Ansprüche 1 bis 6 vorhanden ist.

8. Steuereinrichtung nach Anspruch 6 oder 7, **dadurch gekennzeichnet, dass** die Steuereinrichtung mindestens zwei Arme (18, 19) aufweist, **dass** an mindestens zwei Armen (18, 19) je eine Vorrichtung nach einem der Ansprüche 1 bis 5 vorhanden ist, und **dass** die Sensoren der an den mindestens zwei Armen (18, 19) vorhandenen Vorrichtungen zur Erfassung von Biegemomenten in voneinander verschiedenen räumliche Richtungen (16, 17) geschaltet sind.

9. Computer, mit einem Bildschirm, mit einer Vorrichtung zur Steuerung eines Cursors und mit einer Schnittstelle (6) für eine Vorrichtung zur Steuerung eines Cursors, **dadurch gekennzeichnet, dass** der Computer eine Vorrichtung zur Steuerung des Cursors nach einem der Ansprüche 1 bis 5, eine Anordnung nach Anspruch 6 oder eine Steuereinrichtung nach einem der Ansprüche 7 oder 8 aufweist.
